# FASCICULE DE BREVET EUROPEEN

(11) **EP 0 668 130 B1**
(45) Date de publication et mention de la délivrance du brevet: **05.11.1997**
(21) Numéro de dépôt: 95400341.4
(22) Date de dépôt: 17.02.1995
(51) Int. Cl.: B25J 17/02, B25J 9/10

(54) **Dispositif manipulateur, à structure parallèle, pour déplacer et orienter un objet dans un espace de travail cylindrique**
Handhabungsgerät mit paralleler Struktur zum Versetzen und Orientieren eines Gegenstandes in einem zylindrischen Arbeitsraum
Manipulator device with a parallel structure for moving and orienting an object in a cylindrical workspace

(30) Priorité: 22.02.1994 FR 9401979
(43) Date de publication de la demande: 23.08.1995
(73) Titulaire: Office National d'Etudes et de Recherches Aérospatiales (O.N.E.R.A.), 92320 Châtillon-sous-Bagneux (FR)
(72) Inventeur: Reboulet, Claude, F-31320 Labege (FR)
(74) Mandataire: Gorrée, Jean-Michel

(56) Documents cités:
- EP-A- 0 084 249
- EP-A- 0 200 105
- EP-A- 0 232 930
- DE-A- 2 819 976
- GB-A- 2 120 635
- US-A- 2 286 571

## Description

La présente invention concerne un dispositif manipulateur à structure parallèle permettant de déplacer et d'orienter un objet dans un espace de travail prédéterminé, ledit dispositif comportant une embase, un élément mobile constituant le susdit objet ou auquel est raccordé le susdit objet, et trois mécanismes d'entraînement motorisés interposés chacun entre l'embase et l'élément mobile.

A titre d'exemple, un dispositif manipulateur visé par l'invention peut être utilisé pour manipuler des supports d'informations, tels que des cassettes de bandes magnétiques, de disques analogiques ou numériques, etc., dans une bibliothèque informatique présentant une paroi cylindrique (de révolution ou non) munie d'alvéoles de rangement desdites cassettes.

La conformation particulière de l'espace dans lequel doit se mouvoir le dispositif manipulateur permet d'envisager une structure spécifique, capable de déplacer un objet en lui maintenant une orientation radiale et sensiblement plus simple que la structure de dispositifs manipulateurs connus (par exemple d'après le document FR-A-2 670 424) qui étaient agencés pour mouvoir un objet parallèlement à lui-même.

A cette fin, un dispositif manipulateur du type précité se caractérise essentiellement, étant agencé conformément à l'invention, en ce que :
- le premier et le deuxième mécanismes d'entraînement comprennent chacun
   . un moyen moteur qui est mobile dans un plan transversal sensiblement perpendiculaire audit axe prédéterminé, sur une trajectoire circulaire centrée sur un axe sensiblement parallèle à l'axe prédéterminé,
   . une bielle interposée entre le moyen moteur et l'élément mobile et raccordée à ceux-ci, à ses extrémités respectives, par des moyens d'articulation à rotation bidirectionnelle,
   . et un organe de transmission d'attitude associé fonctionnellement à ladite bielle de manière que tout déplacement de la bielle s'accompagne du maintien de l'élément mobile parallèlement audit plan transversal,
   de façon que lesdits mécanismes d'entraînement soient aptes à coagir fonctionnellement sur l'élément mobile pour définir sa position angulaire autour de l'axe prédéterminé ainsi que sa distance par rapport à un axe fictif passant par les deux extrémités des bielles raccordées aux moyens moteurs respectifs,
- et le troisième mécanisme d'entraînement est monté sur l'embase, à libre rotation autour d'un axe sensiblement parallèle à l'axe prédéterminé et en dehors du susdit plan transversal à l'axe prédéterminé, et est supporté par l'embase sur un axe de pivotement sensiblement perpendiculaire au susdit axe prédéterminé en étant fonctionnellement actif pour régler la distance qui sépare l'élément mobile de l'axe de pivotement et pour maintenir l'orientation radiale de l'élément mobile par rapport à l'axe prédéterminé,
ce grâce à quoi la position et l'orientation de l'objet dépendent des positions des trois susdits mécanismes et l'espace de travail est un cylindre.

Le dispositif manipulateur conforme à l'invention présente donc cet avantage essentiel, par rapport à d'autres dispositifs manipulateurs connus, que les trois mécanismes d'actionnement, et trois seulement, sont aptes non seulement à déplacer l'objet, mais encore à orienter l'objet dans un espace de travail cylindrique.

Pour obtenir une structure plus simple et une rapidité de fonctionnement élevée, il est souhaitable de prévoir que chaque moyen moteur comprenne un bras sensiblement radial apte à pivoter, sous l'action de moyens de motorisation, sur l'embase autour d'un axe sensiblement parallèle audit axe prédéterminé.

De même, il est souhaitable de faire en sorte que le troisième mécanisme comporte : un bras qui s'étend approximativement dans un plan défini par le susdit axe prédéterminé et la susdite direction radiale et qui est supporté par l'embase à libre rotation autour d'un axe sensiblement parallèle au susdit axe prédéterminé, le bras étant apte à pivoter, sous l'action de moyens moteurs, dans le susdit plan par rapport à l'embase autour d'un axe sensiblement perpendiculaire à l'axe prédéterminé ; et une bielle interposée entre l'extrémité libre du bras et l'élément mobile, la bielle étant raccordée à ces derniers à libre rotation par des axes respectifs sensiblement parallèles l'un à l'autre et sensiblement perpendiculaires à l'axe prédéterminé.

Pour simplifier également la commande des mécanismes d'entraînement et pour réaliser un dispositif permettant de couvrir un champ angulaire de 360°, on prévoit que les premier et deuxième mécanismes d'entraînement sont montés pivotants sur l'embase autour d'un axe commun qui coïncide avec l'axe prédéterminé et que le troisième mécanisme d'entraînement est monté sur l'embase à libre rotation autour de l'axe prédéterminé. Toujours dans un souci de simplification des commandes, il est intéressant que les moyens moteurs mobiles, respectivement, des premier et deuxième mécanismes d'entraînement aient des déplacements synchronisés de manière qu'ils soient déplacés simultanément dans le même sens ou en sens inverses sur des distances angulaires égales.

Dans un mode de réalisation préféré, les moyens d'articulation et l'organe de transmission d'attitude des premier et deuxième mécanismes d'entraînement sont structurellement combinés et comprennent pour chaque mécanisme, d'une part, deux roues raccordées aux deux extrémités respectives de la bielle sur des axes transversaux à la bielle et à l'axe prédéterminé et reliées respectivement au bras et à l'élément mobile par des axes diamétraux et, d'autre part, un lien souple s'enroulant sans glissement sur lesdites roues ; il est alors intéressant, pour obtenir une structure simple, mais fiable, que le lien souple soit un câble solidarisé aux deux roues.

Dans le cas d'un espace cylindrique ayant une grande hauteur excédant la capacité de débattement axial des mécanismes d'entraînement, on peut accroître cette capacité en prévoyant que l'embase est agencée pour pouvoir être déplacée linéairement parallèlement à l'axe prédéterminé.

Grâce aux dispositions conformes à l'invention, l'élément mobile possède trois degrés de liberté qui sont similaires à celles d'un robot conventionnel de type cylindrique, mais en ayant recours à une cinématique de commande à structure parallèle qui procure une vitesse de déplacement et de positionnement très élevée.

De plus, contrairement à une structure cinématique de type série (dans laquelle le n^{ième} moteur est porté par le (n-1)^{ième} bras, lui-même entraîné par le (n-1)^{ième} moteur, etc.) qui conduit à un surdimensionnement des éléments et à des inerties élevées entraînant des vitesses de déplacement plus faibles, le dispositif à structure parallèle conforme à l'invention permet d'obtenir la même rigidité avec des organes mobiles plus légers ayant des inerties beaucoup plus faibles.

Par conséquent, les performances en vitesse d'un dispositif de type parallèle agencé conformément à l'invention sont bien supérieures à celles que peut procurer un robot conventionnel de type série.

L'invention sera mieux comprise à la lecture de la description détaillée qui suit d'un mode de réalisation préféré donné uniquement à titre d'exemple. Dans cette description, on se réfère aux dessins annexés sur lesquels :
- la figure 1 est une vue très schématique de côté, en perspective, illustrant le principe de réalisation d'un dispositif manipulateur à structure parallèle conforme à l'invention ;
- la figure 2 est une vue schématique de côté, en perspective, d'un mode de réalisation préféré d'un dispositif manipulateur à structure parallèle agencé conformément à l'invention ; et
- la figure 3 est une vue schématique en perspective d'un détail de réalisation du dispositif de la figure 1 ou 2.

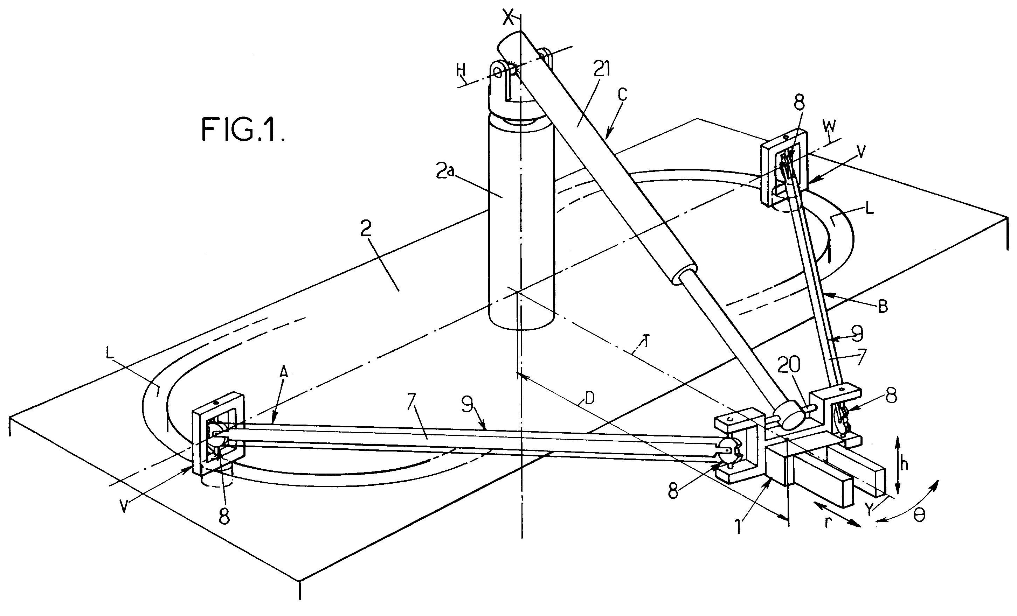

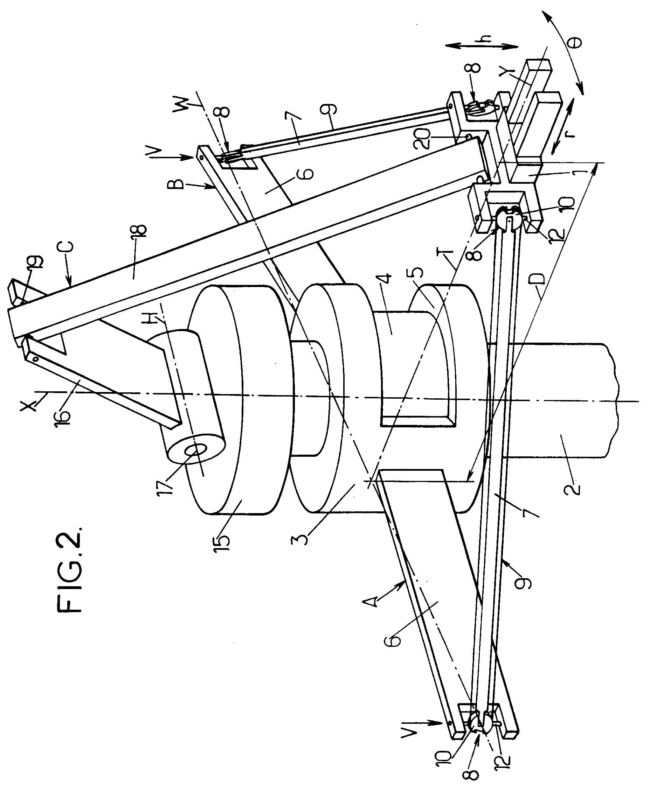

Sur les figures 1 et 2 , seule est montrée la partie du dispositif manipulateur entrant dans le cadre de l'invention et n'apparaissent notamment ni les moyens de commande assurant le fonctionnement du dispositif, ni les limites de l'espace cylindrique dans lequel travaille le dispositif. L'espace cylindrique est simplement schématisé par son axe central et/ou axe de symétrie X.

En se reportant tout d'abord à la figure 1, le dispositif manipulateur à structure parallèle permet, dans son principe, de déplacer un objet dans un espace cylindrique d'axe X prédéterminé, de façon telle que l'objet demeure parallèle à un plan transversal donné, perpendiculaire à l'axe X, et que, simultanément, un axe privilégié Y de l'objet demeure dirigé en permanence vers l'axe X ; autrement dit, le dispositif manipulateur de l'invention permet d'assurer simultanément la double fonction de déplacement et d'orientation de l'objet dans un espace cylindrique. Le dispositif comporte une embase 2, un élément mobile 1 qui peut être l'objet lui-même ou bien auquel est raccordé ledit objet (par exemple l'élément mobile 1 est ici représenté schématiquement sous forme d'une pince de préhension), et trois mécanismes d'entraînement A, B et C interposés chacun entre l'embase 2 et l'élément mobile 1.

Le premier et le deuxième mécanismes d'entraînement A et B peuvent être constitués identiquement et ils s'étendent entre l'embase 2 et à l'élément mobile 1.

Chaque mécanisme d'entraînement A et B comprend essentiellement :
- un moyen moteur V, dont un exemple précis de réalisation sera donné plus loin, qui est mobile dans un plan fixe transversal sensiblement perpendiculaire à l'axe X (plan qui peut être l'embase 2), sur une trajectoire circulaire L qui est centrée sur un axe sensiblement parallèle à l'axe X ;
- une bielle 7 interposée entre le moyen moteur V et l'élément mobile 1 et raccordée à ceux-ci, à ses extrémités respectives, par des moyens 8 d'articulation en rotation bidirectionnelle ;
- et un organe de transmission d'attitude 9 associé fonctionnellement à la bielle 7 de manière que tout déplacement de la bielle s'accompagne du maintien de l'élément mobile 1 parallèlement au plan transversal à l'axe X.

Les mécanismes d'entraînement A et B étant ainsi agencés, tout déplacement angulaire de l'un et/ou de l'autre moyen moteur V provoque, par l'intermédiaire respectivement de l'une et/ou de l'autre bielle 7, un mouvement de l'élément mobile, qui peut se décomposer en une rotation autour de l'axe X (degré de liberté θ) et/ou un déplacement linéaire radial selon l'axe T joignant l'élément mobile 1 à l'axe X (degré de liberté r). L'élément mobile 1 conserve toutefois encore une possibilité de rotation, par l'intermédiaire des bielles 7, sur les articulations 8 liant lesdites bielles 7 aux moyens moteurs V, c'est-à-dire une possibilité de rotation dans le plan défini par les axes X et T, autour d'un axe fictif W passant par les moyens moteurs V.

Les deux mécanismes d'entraînement A et B sont donc aptes à agir fonctionnellement sur l'élément mobile 1 pour définir sa position angulaire autour de l'axe X (degré de liberté θ) ainsi que sa distance D à l'axe fictif W (degré de liberté r).

Pour simplifier la commande des moyens moteurs V, il est souhaitable que les déplacements des deux moyens moteurs V soient synchronisés, de façon qu'ils se déplacent simultanément avec des amplitudes angulaires égales, soit dans le même sens, soit dans des sens inverses. Dans ces conditions, leur déplacement simultané dans le même sens se traduit par la rotation de l'axe T autour de l'axe X (la distance D restant constante), tandis que leur déplacement simultané dans des sens inverses se traduit par une diminution ou un accroissement de la distance D le long de l'axe T qui reste fixe.

Toujours pour simplifier la commande des moyens moteurs V et pour conférer au dispositif un débattement dans un champ angulaire de 360°, il est souhaitable que les trajectoires circulaires desdits moyens moteurs V soient coaxiales à l'axe X et de même rayon (cas représenté dans l'agencement de la figure 2).

Dans le mode de réalisation préféré qui est représenté à la figure 2, les premier et deuxième mécanismes d'entraînement A et B comprennent respectivement deux tambours 3 et 4 coaxiaux à l'axe X et supportés par l'embase 2 qui est réalisée sous forme d'un pilier cylindrique de révolution. Ces deux tambours sont associés à des moyens moteurs respectifs (non montrés) assurant leur rotation autour de l'axe X indépendamment l'un de l'autre. Pour rendre l'ensemble plus compact, on peut prévoir que les deux tambours sont emboîtés l'un dans l'autre ; le tambour extérieur 3 présente une lumière 5 s'étendant circonférentiellement et découvrant une partie du tambour intérieur 4 pour le libre passage du bras radial 6 supporté par ce tambour.

Pour le reste, les premier et deuxième mécanismes d'entraînement A et B sont constitués des mêmes organes. Chacun des moyens moteurs V comprend l'un des susdits tambours 3, 4 et un bras 6 sensiblement radial supporté par le tambour correspondant 3, 4, le bras du tambour intérieur 4 traversant la lumière 5 du tambour extérieur 3 de manière que les deux bras soient situés sensiblement dans le même plan. La bielle 7 correspondante est interposée entre l'extrémité libre du bras 6 et l'élément mobile 1, cette bielle 7 étant raccordée à ces derniers, respectivement à ses deux extrémités, par les moyens d'articulation 8 lui conférant un libre débattement dans l'espace.

Bien entendu, il est également possible d'envisager d'autres agencements équivalents, par exemple avec deux tambours superposés et au moins un bras en décrochement pour être ramené sensiblement dans le même plan que l'autre bras.

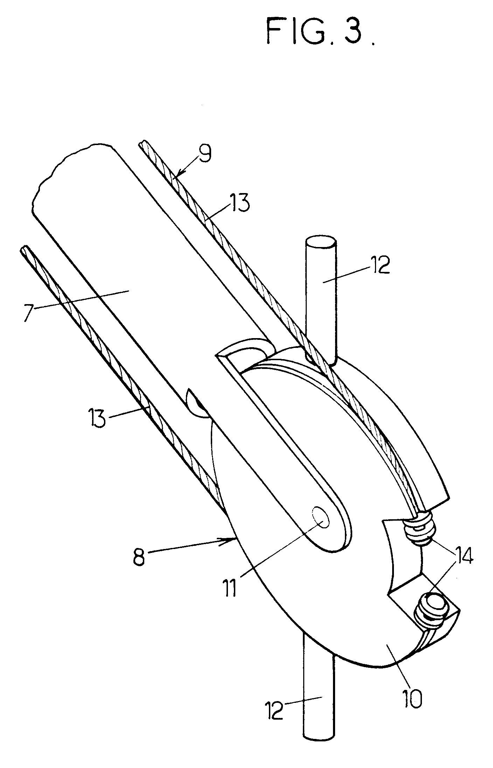

Les moyens d'articulation 8 et l'organe de transmission d'attitude 9 peuvent être fonctionnellement et structurellement combinés et être constitués de la manière suivante qui est mieux visible, à plus grande échelle, à la figure 3. A chacune de ses extrémités, la bielle 7 est montée sur une roue 10 par un axe 11 transversal à la bielle et à l'axe X et, en outre, la roue 10 supporte un axe diamétral 12 sensiblement parallèle à l'axe X, qui la solidarise au bras 6 ou à l'élément mobile 1, respectivement, pour former une articulation du type cardan de telle sorte que la bielle peut s'incliner, selon une direction parallèle à l'axe X, par rapport au bras 6 et que la bielle possède un débattement transversalement à l'axe X. Enfin, un lien souple 13 qui s'enroule sans glissement sur les deux roues 10 et est tendu parallèlement à la bielle 7 transmet d'une roue à l'autre la position angulaire relative de la bielle 7 et du bras 6, de sorte que l'élément mobile 1 est maintenu en permanence parallèle à un plan transversal à l'axe quels que soient les déplacements et les positions des bielles 7. Le lien souple 13 peut être une courroie crantée ou un câble. Sur les dessins annexés, il s'agit de deux tronçons de câble parallèles, disposés de part et d'autre de la bielle 7, qui sont solidarisés aux roues 10 par des moyens de fixation et de réglage de tension 14.

Quant au troisième mécanisme d'entraînement C, il est agencé pour soutenir l'élément mobile 1 en suivant librement les évolutions imprimées à l'élément mobile 1 par les mécanismes A et B et pour contrôler le troisième degré de liberté de l'élément mobile 1, savoir sa rotation autour de l'axe W précité et donc sa position au-dessus ou au-dessous du plan dans lequel se meuvent les moyens moteurs V.

Comme montré à la figure 1, le mécanisme d'entraînement C est monté sur l'embase 2 à libre rotation autour d'un axe sensiblement parallèle à l'axe X et est situé en dehors du plan dans lequel se meuvent les moyens moteurs V. A cette fin, l'embase 2 présente une partie saillante 2a (par exemple sous forme d'un pilier) sur lequel est monté à libre rotation le mécanisme d'entraînement C. En outre, le mécanisme d'entraînement C est supporté par la partie saillante 2a de l'embase 2 sur un axe de pivotement H sensiblement perpendiculaire à l'axe X, et il est fonctionnellement actif pour régler la distance qui sépare l'élément mobile 1 et ledit axe de pivotement H afin de contrôler le troisième degré de liberté h de l'élément mobile 1. Sur la figure 1, le mécanisme C est représenté sous forme d'un bras télescopique 21 (piston pneumatique ou hydraulique, crémaillère) de longueur variable commandée par des moyens non représentés, le bras télescopique 21 étant librement pivotant sur l'axe H.

Toujours pour simplifier les commandes, l'axe de rotation du troisième mécanisme C sur l'embase 2 coïncide de préférence avec l'axe X.

Dans le mode de réalisation préféré montré à la figure 2, le mécanisme d'entraînement C comporte un tambour fou 15 librement rotatif sur l'embase 2 (par exemple supporté à l'extrémité de celle-ci) et coaxial à l'axe X. Un bras 16 est supporté par le tambour 15 de manière à pouvoir tourner, sous l'action de moyens moteurs non représentés, autour de l'axe H sensiblement perpendiculaire à l'axe X. Une bielle 18 s'étend entre l'extrémité libre du bras 16 et l'élément mobile 1.

Finalement, on dévolue également au troisième mécanisme C la fonction de contrôler le troisième degré de liberté d'attitude de l'élément mobile 1 et d'assurer que son axe privilégié Y demeure constamment dirigé vers l'axe X (position radiale colinéaire à l'axe T dans le cas d'un espace cylindrique de révolution comme représenté sur les figures 1 et 2). A cette fin, la bielle 18 est raccordée à libre rotation à l'élément mobile 1 par un axe 20 sensiblement perpendiculaire à l'axe X. Dans le mode de réalisation de la figure 2, la bielle 18 est également raccordée à libre rotation à l'extrémité libre du bras 16 par un axe 19 parallèle à l'axe 20 et perpendiculaire à l'axe X.

Ainsi agencé, le mécanisme d'entraînement C se déploie dans un plan défini par les axes X et Y et pivote autour de l'axe X.

La position et l'orientation de l'élément mobile 1 dépendent de la position des trois mécanismes A, B et C, correspondant à des positions données des trois moteurs de commande respectifs. En effet, les actions combinées des deux premiers mécanismes A et B fixent la position du plan déterminé par les axes X et T, plan dans lequel l'élément mobile 1 conserve une possibilité de rotation autour de l'axe W, et fixent l'élément mobile dans une attitude, parallèlement au plan transversal à l'axe X. Par conséquent, la position de l'élément 1 selon l'axe X, ainsi que l'orientation de l'axe privilégié Y de l'élément 1 autour de l'axe X sont encore libres et ne peuvent pas être imposés par les deux premiers mécanismes A et B. La présence du troisième mécanisme C permet de fixer ces deux mobilités encore libres.

Le dispositif manipulateur agencé conformément à l'invention permet donc, par une commande adéquate de chacun des trois moteurs, de piloter trois mobilités de l'élément 1, savoir :
- sa position angulaire θ autour de l'axe X,
- sa distance radiale r par rapport à l'axe X,
- et sa position h parallèlement à l'axe X.

Pour ce qui concerne ce dernier paramètre, on peut encore accroître l'amplitude de la mobilité de l'élément 1 parallèlement à l'axe X en conférant à l'embase 2 une possibilité de déplacement parallèlement à l'axe X.

Bien que le dispositif de l'invention a été décrit en relation avec un espace de travail cylindrique, notamment de révolution, qui semble correspondre à l'application la plus courante, on comprendra que ce même dispositif peut opérer également dans un espace de révolution non strictement cylindrique au sens géométrique du terme, tel qu'un espace pyramidal ou conique, qui possède un axe de symétrie.

## Revendications

1. Dispositif manipulateur à structure parallèle permettant de déplacer et d'orienter un objet dans un espace de travail prédéterminé, ledit dispositif comportant une embase (2), un élément mobile (1) constituant le susdit objet ou auquel est raccordé le susdit objet, et trois mécanismes d'entraînement motorisés (A, B, C) interposés chacun entre l'embase (2) et l'élément mobile (1), caractérisé en ce que
- le premier et le deuxième mécanismes d'entraînement (A, B) comprennent chacun
. un moyen moteur (V) qui est mobile dans un plan trans versal sensiblement perpendiculaire à l'axe (X) prédéterminé, sur une trajectoire circulaire (L) centrée sur un axe sensiblement parallèle a l'axe (X) prédéterminé,
. une bielle (7) interposée entre le moyen moteur et l'élément mobile (1) et raccordée à ceux-ci, à ses extrémités respectives, par des moyens (8) d'articulation à rotation bidirectionnelle,
. et un organe de transmission d'attitude (9) associé fonctionnellement à ladite bielle (7) de manière que tout déplacement de la bielle s'accompagne du maintien de l'élément mobile parallèlement au plan transversal audit axe (X) prédéterminé,
de façon que lesdits mécanismes d'entraînement (A, B) soient aptes à coagir fonctionnellement sur l'élément mobile (1) pour définir sa position angulaire autour de l'axe (X) prédéterminé ainsi que sa distance (D) par rapport à un axe fictif (W) passant par les deux extrémités des bielles raccordées aux moyens moteurs (V) respectifs,
- et le troisième mécanisme d'entraînement (C) est monté sur l'embase (2), à libre rotation autour d'un axe sensiblement parallèle à l'axe (X) prédéterminé ; et en dehors du susdit plan transversal à l'axe (X) prédéterminé, et est supporté par l'embase (2) sur un axe de pivotement (H) sensiblement perpendiculaire au susdit axe (X) prédéterminé en étant fonctionnellement actif pour régler la distance qui sépare l'élément mobile (1) de l'axe de pivotement (H) et pour maintenir l'orientation radiale (Y) de l'élément mobile (1) par rapport à l'axe (X) prédéterminé,
ce grâce à quoi la position et l'orientation de l'objet dépendent des positions des trois susdits mécanismes (A, B, C) et l'espace de travail est un cylindre d'axe (X).

2. Dispositif manipulateur selon la revendication 1, caractérisé en ce que chaque moyen moteur (V) comprend un bras (6) sensiblement radial apte à pivoter, sous l'action de moyens de motorisation, sur l'embase (2) autour d'un axe sensiblement parallèle audit axe (X) prédéterminé.

3. Dispositif manipulateur selon la revendication 1 ou 2, caractérisé en ce que le troisième mécanisme d'entraînement (C) comporte : un bras (16) s'étendant approximativement dans un plan défini par les susdits axes (X) et (Y) et supporté par l'embase (2) à libre rotation autour d'un axe sensiblement parallèle au susdit axe (X) prédéterminé, ledit bras étant apte à pivoter, sous l'action de moyens moteurs, dans le susdit plan par rapport à l'embase autour d'un axe (H) sensiblement perpendiculaire à l'axe (X) prédéterminé ; et une bielle (18) interposée entre l'extrémité libre du bras (16) et l'élément mobile (1), la bielle (18) étant raccordée à ces derniers à libre rotation par des axes respectifs (19, 20) sensiblement parallèles l'un à l'autre et sensiblement perpendiculaires à l'axe (X) prédéterminé.

4. Dispositif manipulateur selon l'une quelconque des revendications 1 à 3, caractérisé en ce que les premier et deuxième mécanismes d'entraînement (A, B) sont montés pivotants sur l'embase (2) autour d'un axe commun qui coïncide avec l'axe (X) prédéterminé et en ce que le troisième mécanisme d'entraînement (C) est monté sur l'embase (2) à libre rotation autour de l'axe (X) prédéterminé.

5. Dispositif manipulateur selon l'une quelconque des revendications 1 à 4, caractérisé en ce que les moyens moteurs mobiles (V) respectivement des premier et deuxième mécanismes d'entraînement (A, B) ont des déplacements synchronisés de manière qu'ils soient déplacés simultanément dans le même sens ou en sens inverse sur des distances angulaires égales.

6. Dispositif manipulateur selon l'une quelconque des revendications 3 à 5, caractérisé en ce que les moyens d'articulation (8) et l'organe de transmission d'attitude (9) des premier et deuxième mécanismes d'entraînement (A, B) sont structurellement combinés et comprennent, d'une part, deux roues (10) raccordées aux deux extrémités respectives de la bielle (7) sur des axes (11) transversaux à la bielle et à l'axe (X) prédéterminé et reliées respectivement au bras (6) et à l'élément mobile (1) par des axes diamétraux (12) et, d'autre part, un lien souple (13) s'enroulant sans glissement sur lesdites roues.

7. Dispositif manipulateur selon la revendication 6, caractérisé en ce que le lien souple (15) est un câble solidarisé aux deux roues (10).

8. Dispositif manipulateur selon l'une quelconque des revendications 1 à 7, caractérisé en ce que l'embase (2) est agencée pour pouvoir être déplacée linéairement parallèlement à l'axe (X) prédéterminé.

## Claims

1. A parallel structure manipulator device enabling an object to be displaced and oriented in a predetermined work space, said device comprising a base (2), a moving element (1) constituting said object or having said object connected thereto, and three powered drive mechanisms (A, B, C) each interposed between the base (2) and the moving element (1), characterized in that :
- each of the first and the second drive mechanism (A, B) comprises :
. a mover means (V) which is movable in a transverse plane substantially perpendicular to the predetermined axis (X) along a circular path (L) centered on an axis substantially parallel to the predetermined axis (X) ;
. a connecting rod (7) interposed between the mover means and the moving element (1) and connected thereto at respective ends via hinge means (8) capable of two-directional rotation ; and
. an attitude transmission member (9) functionally associated with said connecting rod (7) in such a manner that any displacement of the connecting rod is accompanied by the moving element being kept parallel to the plane extending transversely to said predetermined axis (X) ;
whereby said drive mechanisms (A, B) are suitable for operating together on the moving element (1) to define its angular position about the predetermined axis (X) and also its distance (D) relative to a notional axis (W) passing through the two connecting rod ends that are connected to the respective mover means (V) ; and
- the third drive mechanism (C) is mounted on the base (2) so as to be free to rotate about an axis that is substantially parallel to the predetermined axis (X) ; and away from the above-mentioned plane extending transversely to the predetermined axis (X), and is supported by the base (2) on a pivot axis (H) substantially perpendicular to the above-mentioned predetermined axis (X) while being functionally active to adjust the distance between the moving element (1) and the pivot axis (H) and to maintain the radial orientation (Y) of the moving element (1) relative to the predetermined axis (X) ;
whereby the position and the orientation of the object depend on the positions of the three above-mentioned mechanisms (A, B, C), and the work space is a cylinder with said axis X.

2. A manipulator device according to claim 1, characterized in that each mover means (V) comprises a substantially radial arm (6) suitable for pivoting under the action of motor means on the base (2) about an axis substantially parallel to said predetermined axis (X).

3. A manipulator device according to claim 1 or 2, characterized in that the third drive mechanism (C) comprises : an arm (16) extending approximately in a plane defined by the above-mentioned axes (X) and (Y) and supported by the base (2) so as to be free to rotate about an axis substantially parallel to the above-mentioned predetermined axis (X), said arm being suitable for pivoting under the action of mover means in the above-mentioned plane relative to the base about an axis (H) substantially perpendicular to the predetermined axis (X) ; and a connecting rod (18) interposed between the free end of the arm (16) and the moving element (1), the connecting rod (18) being connected thereto so as to be free to rotate by means of respective pins (19, 20) that are substantially parallel to each other and substantially perpendicular to the predetermined axis (X).

4. A manipulator device according to any one of claims 1 to 3, characterized in that the first and second drive mechanisms (A, B) are pivotally mounted on the base (2) to pivot about a common axis which coincides with the predetermined axis (X), and in that the third drive mechanism (C) is mounted on the base (2) so as to be free to rotate about the predetermined axis (X).

5. A manipulator device according to any one of claims 1 to 4, characterized in that the moving mover means (V) of the first and second drive means (A, B) respectively have their displacements synchronized so that they are displaced simultaneously in the same direction or in opposite directions over equal angular distances.

6. A manipulator device according to any one of claims 3 to 5, characterized in that the hinge means (8) and the attitude transmission member (9) of each of said first and second drive mechanisms (A, B) are structurally combined and comprise firstly two wheels (10) connected to respective opposite ends of the connecting rod (7) about axes (11) that are transverse to the rod and to the predetermined axis (X), and that are connected respectively to the arm (6) and to the moving element (1) by diametrically-extending shafts (12), and secondly a flexible link (13) wound without slip on said wheels.

7. A manipulator device according to claim 6, characterized in that the flexible link (15) is a cable secured to both wheels (10).

8. A manipulator device according to any one of claims 1 to 7, characterized in that the base (2) is organized to be capable of being displaced linearly parallel to the predetermined axis (X).

## Patentansprüche

1. Manipulatorvorrichtung mit Parallelstruktur zum Verschieben und Ausrichten eines Gegenstandes in einem festgelegten Arbeitsraum mit einem Sockel (2), einem beweglichen Element (1), das den genannten Gegenstand darstellt oder an dem der genannte Gegenstand angebracht ist, und drei motorisierten Antriebsmechanismen (A, B, C), die jeweils zwischen dem Sockel (2) und dem beweglichen Element (1) angeordnet sind, **dadurch gekennzeichnet,** daß
- der erste und der zweite Antriebsmechanismus (A, B) jeweils enthalten:
• ein Antriebsmittel (V), das in einer im wesentlichen senkrecht zur festgelegten Achse (X) verlaufenden Querebene auf einer Kreisbahn (L) beweglich ist, die in bezug auf eine im wesentlichen parallel zur festgelegten Achse (X) verlaufende Achse zentriert ist,
• eine zwischen dem Antriebsmittel und dem beweglichen Element (1) angeordnete und mit diesen an ihren beiden Enden jeweils mit Zweirichtungsdrehgelenkmitteln (8) verbundene Stange (7),
• und ein der Stange (7) funktionell in einer solchen Weise zugeordnetes Lageübertragungsorgan (9), daß jede Verschiebung der Stange das Beibehalten des beweglichen Elements parallel zu der quer zur festgelegten Achse (X) verlaufenden Ebene zur Folge hat,
so daß die Antriebsmechanismen (A, B) dazu in der Lage sind, funktionell auf das bewegliche Element (1) einzuwirken, um dessen winkelmäßige Position um die festgelegte Achse (X) sowie dessen Abstand (D) in bezug auf eine fiktive, durch die beiden mit den jeweiligen Antriebsmitteln (V) verbundenen Enden der Stangen verlaufende Achse (W) zu bestimmen,
- und der dritte Antriebsmechanismus (C) auf dem Sockel (2) bei freier Drehbarkeit um eine zur festgelegten Achse (X) im wesentlichen parallel verlaufende Achse und außerhalb der genannten quer zur festgelegten Achse (X) verlaufenden Ebene angebracht ist und durch den Sockel (2) auf einer zur festgelegten Achse (X) im wesentlichen senkrecht verlaufenden Schwenkachse (H) getragen wird, wobei er funktionell zur Einstellung des Abstandes, der das bewegliche Element (1) von der Schwenkachse (H) trennt, und zur Beibehaltung der radialen Ausrichtung (Y) des beweglichen Elements (1) in bezug auf die festgelegte Achse (X) wirksam ist,
dies aufgrund dessen, daR die Position und die Ausrichtung des Gegenstandes von den Positionen der drei genannten Mechanismen (A, B, C) abhängen und der Arbeitsraum ein Zylinder der Achse (X) ist.

2. Manipulatorvorrichtung nach Anspruch 1, **dadurch gekennzeichnet,** daß jedes Antriebsmittel (V) einen im wesentlichen radialen Arm (6) enthält, der in der Lage ist, auf dem Sockel (2) unter Einwirkung von Motorisierungsmitteln um eine zur festgelegten Achse (X) im wesentlichen parallel verlaufende Achse zu schwenken.

3. Manipulatorvorrichtung nach Anspruch 1, **dadurch gekennzeichnet,** daß der dritte Antriebsmechanismus (C) umfaßt: einen Arm (16), der sich annähernd in einer durch die genannten Achsen (X) und (Y) definierten Ebene erstreckt und vom Sockel (2) bei freier Drehbarkeit um eine zur festgelegten Achse (X) im wesentlichen parallel verlaufende Achse getragen ist, wobei dieser Arm in der Lage ist, unter Einwirkung von Antriebsmitteln in der genannten Ebene in bezug auf den Sockel um eine zur festgelegten Achse (X) im wesentlichen senkrechte Achse (H) zu schwenken; und eine Stange (18), die zwischen dem freien Ende des Arms (16) und dem beweglichen Element (1) angeordnet ist, wobei die Stange (18) mit den letzteren bei freier Drehbarkeit an zur festgelegten Achse (X) im wesentlichen senkrecht verlaufenden und zueinander jeweils im wesentlichen parallel verlaufenden Achsen (19, 20) verbunden ist.

4. Manipulatorvorrichtung nach einem der Ansprüche 1 bis 3, **dadurch gekennzeichnet,** daß die ersten beiden Antriebsmechanismen (A, B) auf dem Sockel (2) um eine gemeinsame, mit der festgelegten Achse (X) übereinstimmende Achse schwenkend angebracht sind und daß der dritte Antriebsmechanismus (C) auf dem Sockel (2) bei freier Drehbarkeit um die festgelegte Achse (X) angebracht ist.

5. Manipulatorvorrichtung nach einem der Ansprüche 1 bis 4, **dadurch gekennzeichnet,** daß die jeweiligen Antriebsmittel (V) des ersten und zweiten Antriebsmechanismus (A, B) synchronisierte Verschiebungen haben, derart, daß sie gleichzeitig in der gleichen Richtung oder in umgekehrter Richtung mit gleichen winkelmäßigen Abständen verschoben werden.

6. Manipulatorvorrichtung nach einem der Ansprüche 3 bis 5, **dadurch gekennzeichnet,** daß die Gelenkmittel (8) und das Lageübertragungsorgan (9) des ersten und zweiten Antriebsmechanismus (A, B) aufbaumäßig kombiniert sind und einerseits zwei Rollen (10), die an den jeweiligen Enden der Stange (7) auf zur Stange und zur festgelegten Achse (X) quer verlaufenden Achsen (11) angebracht sind und mit dem Arm (6) bzw. dem beweglichen Element (1) durch diametrale Achsen (12) verbunden sind, und andererseits ein biegsames Band (13) umfassen, das sich ohne Gleiten auf die Rollen aufwickelt.

7. Manipulatorvorrichtung nach Anspruch 6, **dadurch gekennzeichnet,** daß das biegsame Band (13) ein mit den Rollen (10) zu einem Stück vereinigtes Kabel ist.

8. Manipulatorvorrichtung nach einem der Ansprüche 1 bis 7, **dadurch gekennzeichnet,** daß der Sockel (2) so eingerichtet ist, daß er linear parallel zur festgelegten Achse (X) verschoben werden kann.
